# EUROPEAN PATENT SPECIFICATION

(11) **EP 3 430 191 B1**
(45) Date of publication and mention of the grant of the patent: **16.09.2020**
(21) Application number: 17709609.6
(22) Date of filing: 28.02.2017
(51) Int. Cl.: D06G 1/00, B08B 7/00, D06F 43/06, D06B 3/10, D06L 1/18, D06B 3/32

(54) **PROCESS FOR WASHING FABRICS**
VERFAHREN ZUM WASCHEN VON GEWEBEN
PROCÉDÉ DE LAVAGE DE TISSUS

(30) Priority: 15.03.2016 IT UB20161694
(43) Date of publication of application: 23.01.2019
(73) Proprietor: Lafer S.p.A., 36015 Schio (VI) (IT)
(72) Inventor: SCORTEGAGNA, Bruno, 36015 Schio (IT)
(74) Representative: Petraz, Gilberto Luigi
(86) International application number: PCT/EP2017/054655
(87) International publication number: WO 2017/157654

(56) References cited:
- DE-A1- 3 904 514
- JP-A- 2010 180 385
- US-B2- 6 270 844

## Description

### FIELD OF THE INVENTION

The present invention concerns a process for washing fabrics usable in the industrial field of the production of textile products, whether they are made by textile fibers of the animal, vegetable, artificial or synthetic type, or mixed.

More particularly, the invention concerns a washing process that uses carbon dioxide as its main washing fluid.

### BACKGROUND OF THE INVENTION

In the industrial field of production of textiles, it is known to carry out at least one washing treatment, for example when working is complete or during one or more of the intermediate steps, to eliminate pollutant substances like oils and fats present in the textiles as work residues.

The washing processes generally used, depending on the type of pollutant to be eliminated, normally use solvents or hydrocarbons and/or water solutions containing particular soap substances, detergents, wetting agents or suchlike.

In particular, to eliminate the oils and fats from the fabrics, chloride and fluoride solvents are generally used, such as perchloroethylene (C₂Cl₄), which are currently recognized as particularly harmful for users and for the environment, and therefore the residual sludges containing oils, fats and traces of perc must be disposed of as dangerous waste.

The washing processes that use water with detergent substances to facilitate the removal of pollutants have been widely used until now, even though they have a very negative impact on the environment. However, legislation regarding safety and environmental protection is becoming stricter and stricter, and it is therefore necessary to identify industrial washing processes that have a minimal or zero impact on the environment.

The fabrics obtained by washing processes that use solvents and detergents can also be harmful and noxious for those who suffer from allergies or asthma, due to the traces of solvents or detergents that can remain in the fabrics themselves.

As an alternative to washing processes that use solvents or water solutions containing detergents, for some time now liquid carbon dioxide (CO₂) has been used in experiments and proposed. An example is provided in JP 2010-180385.

Liquid carbon dioxide has a considerable solvent power in particular for non-polar substances that allow it to pass through the limit layer of the surfaces of the fibers to be treated.

These characteristics allow it to equal and even improve on the cleaning results obtained so far with traditional processes.

Carbon dioxide is a substance that can easily be found on the market and is inexpensive, because it is a residue of other production processes from which it can be suitably worked and re-used.

In its liquid state CO₂ has quite limited values of surface tension and viscosity, which make liquid CO₂ an optimum wetting agent, able to remove even very viscous liquids from in depth, such as mineral oils with a complex composition, fluid oils of a hydrocarbon nature or paraffins.

Carbon dioxide has solvent potentiality in each of its physical states.

Washing processes with CO₂ used in the state of the art generally provide to treat textile garments and/or articles by immersing them in a bath of liquid carbon dioxide, inside a pressurized treatment chamber, with a pressure of more than 5.2 bar. Washing processes of a known type generally operate at pressures of around 50 bar.

Generally, the articles/garments are inserted in an apparatus provided with a rack that rotates inside a drum, as in traditional washing machines.

Washing processes that use a rotating rack consume a lot of energy to make the rack rotate, due to the weight and inertia of the rack itself and also of the textile material immersed in the bath inside it.

One disadvantage of these processes is that, if industrial fabrics are inserted in such apparatuses, it is unlikely that they will be cleaned uniformly. Indeed, these fabrics do not remain positioned uniformly in the bath during the whole washing cycle, so that some areas can be treated and cleaned better than others, which leads to a consequent non-uniform washing, and the presence of stains on the fabric.

Another disadvantage is that, in known washing processes, the washing treatment is not carried out continuously on the fabric.

Another disadvantage is that the carbon dioxide used during the washing process is filtered and regenerated discontinuously.

Starting from the state of the art as described above, one purpose of the present invention is to provide a process for washing fabrics with carbon dioxide which allows to wash the fabrics uniformly, removing from them oils, fats and/or organic and inorganic contaminants.

Another purpose of the present invention is to perfect a washing process that allows to carry out the washing of the fabrics semi-continuously.

Another purpose is to provide a washing process that allows to continuously recirculate and regenerate the carbon dioxide used for washing.

Another purpose is to provide a washing process that allows to eliminate any type of additive.

Another purpose is to obtain the resultant residual sludges containing oils, fats, etc., without contaminating substances like solvents, detergents, surfactants etc., so that they can be disposed of as non-toxic and non-noxious waste.

Another purpose is to provide a washing process that has a low environmental impact and is not polluting, but at the same time is efficient and allows to obtain great cleanliness of the fabrics.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, the invention provides a process for washing fabrics according to claim 1.

According to some embodiments, the washing process also comprises:
- carrying out a washing treatment on the fabric by immersing it and at the same time beating it in the washing fluid and/or
- carrying out the washing treatment by spraying the washing fluid.

By fabrics here and hereafter in the description we mean fabrics generally consisting of textile fibers of the animal, vegetable, artificial or synthetic type, and/or mixed.

The fabrics can also be open fabrics, tubular fabrics, or fabrics folded over on themselves longitudinally and sewn.

In some embodiments, the treatment chamber is pressurized to pressures of more than 5.2 bar.

According to a characteristic feature of the present invention, the process provides to wash the fabric while it is unwound from and wound onto respective winding/unwinding rolls disposed inside the pressurized treatment chamber.

According to some embodiments, the process provides to insert the fabric to be washed on at least a first winding/unwinding roll, to unwind the fabric from said roll, to carry out the washing treatment while the fabric is being unwound, and to wind the washed fabric onto a second winding/unwinding roll.

According to some embodiments, the washing treatment is carried out continuously during the unwinding/winding of the fabric.

According to some embodiments, the washing process provides to deliver carbon dioxide in a super-cooled liquid form, or alternatively in a two-phase mixture (liquid-steam), onto the fabric during the winding/unwinding thereof by means of suitable delivery means disposed at least along the travel of the fabric between the first unwinding roll and the second winding roll.

According to other embodiments, the washing process also provides to immerse the fabric in a bath of liquid carbon dioxide during its transit from the first unwinding roll to the second winding roll.

In a variant, the process can provide at least one second washing pass with the fabric unwound from the second roll and re-wound onto the first roll.

This process, which uses liquid carbon dioxide, is particularly effective for removing oils and fats present in depth and on the surface of the fabric, in particular in a treatment condition inside a pressurized chamber.

In fact, liquid carbon dioxide has limited values of surface tension and viscosity, which give it a high solvent power especially for low-polar or non-polar pollutant substances or compounds, like oils and fatty substances. Low surface tension and low viscosity allow the liquid carbon dioxide to remove even very viscous liquids in depth, such as mineral oils with complex composition, fluid oils of a hydrocarbon nature and/or paraffins.

According to other variant embodiments, the washing process provides to deliver carbon dioxide in a gaseous form onto the fabric immersed in the liquid carbon dioxide, for example by means of cavitating delivery nozzles or other delivery means.

In particular, the carbon dioxide in a gaseous form can be delivered in the form of saturated steam which, introduced into the super-cooled liquid carbon dioxide, causes the phenomenon of cavitation. In this condition, the bubbles of saturated steam cool quickly and collapse violently, generating impact waves at high temperature and pressure which impact against the fabric to be washed, thus facilitating the removal of dirt.

According to other variant embodiments, in order to generate a similar effect to that of cavitation, the washing process provides to use ultrasounds to increase the washing efficacy of the fabric immersed in the bath of liquid carbon dioxide.

According to some embodiments, the washing process provides to heat the fabric before it is wound onto one of the winding/unwinding rolls at the end of a washing treatment to render gaseous the carbon dioxide retained in the fabric and to remove it therefrom.

According to the invention , the washing process also provides to recirculate and regenerate the gaseous and/or liquid carbon dioxide used during the washing treatment, to allow subsequent use and limit consumption thereof.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic representation of a washing apparatus in which a washing process according to embodiments described here can be carried out;

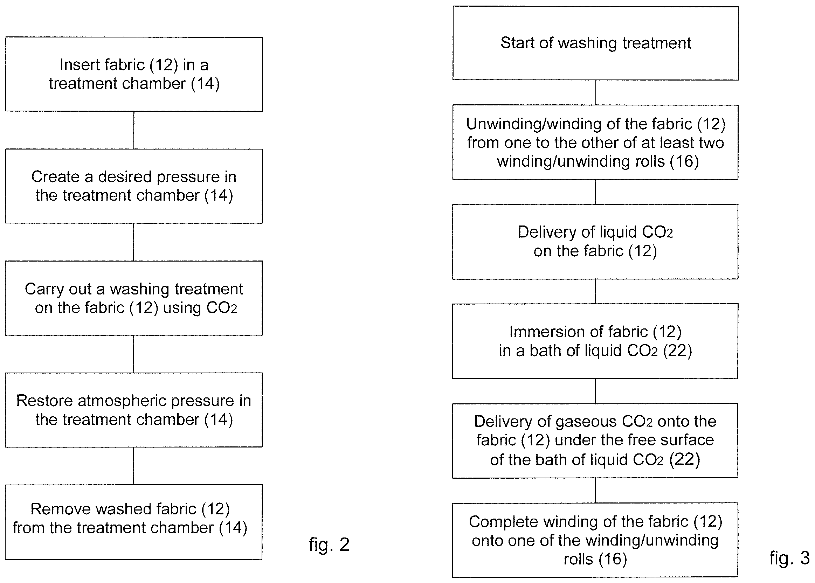

- fig. 2 is a block diagram of a process for washing fabrics according to embodiments described here;
- fig. 3 is a block diagram of a process for washing fabrics according to embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to one embodiment of the invention, an example of which is shown in the attached drawings.

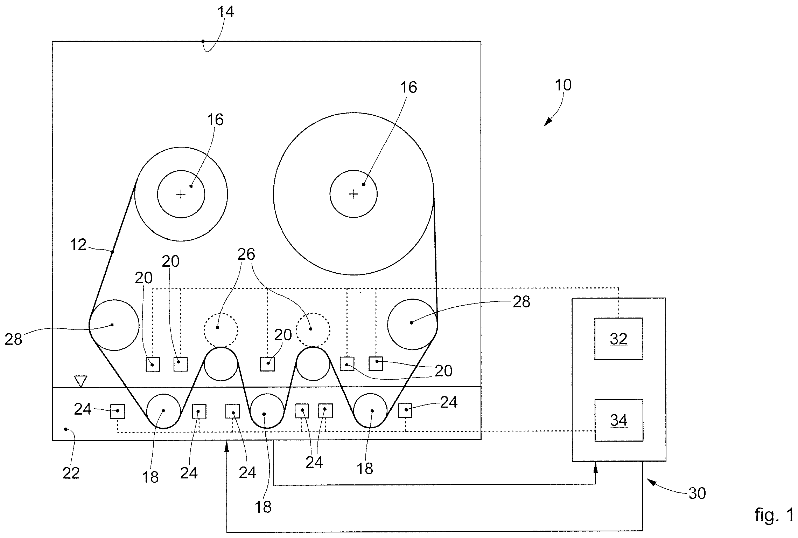

The process for washing fabrics according to the present invention can be carried out, by way of non-restrictive example, in a washing apparatus 10 according to embodiments described using fig. 1.

The washing process according to the present invention provides to insert a fabric 12 to be washed in a treatment chamber 14, inside which a desired pressure is created, and to perform a washing treatment on the fabric 12 using carbon dioxide as washing fluid.

According to some embodiments, depending on the various steps of the washing process, the pressure inside the treatment chamber 14 can vary between about 10 bar and about 60 bar.

According to one feature of the present invention, the process provides to insert the fabric 12 on at least two winding/unwinding rolls 16 before the start of the washing treatment.

In particular, the fabric 12 to be washed is mounted on a first unwinding roll 16 and drawn in on a second winding roll 16.

According to some embodiments, the washing treatment provides to carry out at least one washing cycle, defined by the complete winding/unwinding of the fabric 12 from one winding/unwinding roll 16 to the other.

According to some embodiments, the number of washing cycles, or number of times in which a fabric 12 is unwound/wound on the respective winding/unwinding rolls 16, can be chosen as a function of the type of fabric 12 and/or the type of pollutants that are to be removed.

According to possible solutions, the process can provide to keep the fabric 12 taut between one winding/unwinding roll 16 and the other by means of one or more return rolls 18 configured to define a path for the fabric 12 inside the treatment chamber 14.

According to some embodiments, the washing process provides to deliver carbon dioxide in liquid form by means of first delivery nozzles 20 onto the fabric 12 during its winding/unwinding.

According to some embodiments, the delivery nozzles 20 can deliver super-cooled liquid carbon dioxide, or alternatively in the form of a two-phase mixture of liquid and steam, or under saturation conditions.

According to other embodiments, the washing process can also provide to beat the fabric 12 in the segment of travel between the two winding/unwinding rolls 16, creating a mechanical beating action by suitable beating rolls, not shown, or other suitable means to increase the movement of the fabric 12 and hence to further promote the removal of the pollutant substances.

According to other embodiments, the washing process provides to make the fabric 12 transit in a bath of liquid carbon dioxide 22 during its passage from one winding/unwinding roll 16 to the other.

According to other variant embodiments, the washing process provides to deliver carbon dioxide in gaseous form by means of second delivery nozzles 24 onto the segment of fabric 12 immersed in the bath of liquid carbon dioxide 22.

In particular, the bubbles of vapor of carbon dioxide introduced under the free surface of a bath of super-cooled liquid carbon dioxide 22 quickly cool and collapse. These conditions determine the phenomenon of cavitation and part of the energy generated by the collapse of the bubbles is transformed into impact waves which, impacting against the fabric 12, create a beating effect on it which promotes the removal of the dirt and fatty substances.

According to some embodiments, the washing process can provide to make the fabric 12 transit in the bath of liquid carbon dioxide 22 two or more times in succession, to promote the removal of the fatty substances present on the fabric 12 that bond with the molecules of liquid carbon dioxide.

According to variant embodiments, the fabric 12 can be made to transit inside and outside the bath of liquid carbon dioxide 22 using one or more return rolls 18 suitably positioned.

According to other variant embodiments, the washing process can provide to squeeze and/or wring the fabric 12 at exit from the bath of liquid carbon dioxide 22 before immersing it into the bath again. For example, the process can provide to squeeze and/or wring the fabric 12 by means of squeezer rolls 26 that cooperate with one or more return rolls 18. In particular, one step of the process can provide to squeeze, with a squeezer roll 26, the fabric 12 in transit against a respective return roll 18.

According to some embodiments, the process for washing fabrics can provide to heat the fabric 12 before winding it onto one of the winding/unwinding rolls 16 at the end of the washing treatment to make the carbon dioxide retained in the fabric 12 gaseous and remove it therefrom.

According to some embodiments, the fabric 12 can be heated by making it transit in contact with a heated roll 28.

According to some embodiments, the washing process can be carried out at washing temperatures comprised between about -40°C and about 25°C.

Furthermore, carbon dioxide has optimal anti-bacterial properties, so that it guarantees a deep cleaning and bactericide action even at low temperatures, making the fabrics 12 particularly suitable for those suffering from allergies or asthma.

According to the invention , the process for washing fabrics also provides to continuously recirculate and regenerate the gaseous and/or liquid carbon dioxide used in the treatment chamber 14 during each washing cycle by means of a recirculation circuit 30.

According to some embodiments, the liquid carbon dioxide can be continuously super-cooled and/or kept at the specific temperature at which the process is to be carried out, for example using super-cooling and/or heating devices, not shown.

The super-cooling device, for example, can cool the carbon dioxide to a temperature of about -40°C, so as to keep it at a state of super-cooled liquid.

According to the invention the liquid carbon dioxide used in the treatment chamber 14 can be filtered continuously during the washing cycle to eliminate impurities and pollutant substances collected in it.

According to some embodiments, at the end of each washing cycle, the liquid carbon dioxide can be extracted from the treatment chamber 14 to be cleaned of the non-polar substances removed during the washing cycle, such as for example oils, fatty substances and paraffins.

According to some embodiments, the liquid carbon dioxide can be cleaned and regenerated by ultra-filtering.

According to other embodiments, the liquid carbon dioxide can be cleaned and regenerated, in combination with or alternatively to ultra-filtering, using other membrane technologies such as for example micro-filtering, nano-filtering or inverse osmosis.

The regenerated liquid carbon dioxide can be fed again inside the treatment chamber 14, in the bath of liquid carbon dioxide 22, or delivered by the first delivery nozzles 20, while the liquid carbon dioxide still bonded with the pollutant substances can be cleaned and regenerated by distillation.

According to other embodiments, during distillation, the carbon dioxide is made gaseous so as to separate from it the pollutant substances, which can then be eliminated by a suitable removal circuit.

The gaseous carbon dioxide can then be recondensed by a condenser 32 and stored in a suitable accumulation tank 34.

According to variant embodiments, the liquid carbon dioxide containing the pollutant substances can be distilled without using ultra-filtering.

According to other variant embodiments, at the end of the washing treatment, the gaseous carbon dioxide can be removed from the treatment chamber 14 by a compressor device, not shown.

The gaseous carbon dioxide can be subsequently sent to a condenser 32 and then stored in the accumulation tank 34.

According to some embodiments, the process can provide to aspirate the gaseous carbon dioxide until the treatment chamber 14 has reached a low enough pressure, near values lower than -0.9 bar.

At the end of the washing treatment, the process provides to restore the atmospheric pressure inside the treatment chamber 14, and then to open the treatment chamber 14 to remove the treated fabric 12 and reinsert a new fabric to be treated.

According to possible variant embodiments, two or more treatment chambers 14 can be provided, operating alternately or simultaneously, at least for part of the process, so as to increase productivity and reduce to a minimum the downtimes between one washing treatment and the next.

According to some embodiments, the two or more treatment chambers 14 can share the feed circuit and/or the recirculation circuit 30 of the carbon dioxide.

At least partly different treatments can also be provided between the two or more different treatment chambers 14, according to the washing cycle provided and the operating parameters of the treatment.

According to possible embodiments, for example, the plant can provide another second treatment chamber 14 which can wash a fabric in concomitance with the unloading and subsequent reloading of the fabric 12 on the first treatment chamber 14, using the same recovery and recirculation circuit 30 of the carbon dioxide.

For example, a fabric 12 to be washed can be wound on a first group of rolls 16, 18, 20 outside the first treatment chamber 14 while in the second treatment chamber 14 the washing treatment is carried out on a fabric 12 wound on a second group of rolls 16, 18, 20. At the end of the washing treatment, the washed fabric 12 can be removed from the second treatment chamber 14 and replaced, and washing can proceed in the first treatment chamber 14 preloaded during the washing in the second treatment chamber 14 that uses the second group of rolls 16, 18, 20, allowing to carry out a substantially continuous washing process.

## Claims

1. Process for washing fabrics comprising:
- inserting a fabric (12) to be washed into a treatment chamber (14),
- creating a desired pressure inside the treatment chamber (14);
- carrying out a washing treatment on the fabric (12) using carbon dioxide (CO₂) as a washing fluid;
- restoring atmospheric pressure in the treatment chamber (14);
- carrying out the washing treatment on the fabric (12) while the latter is unwound from and wound onto respective winding/unwinding rolls (16) disposed inside the treatment chamber (14) under pressure;
**characterised in that** it further comprises the steps of:
- recirculate and regenerate the gaseous and/or liquid carbon dioxide used during the washing treatment;
- remove the polluting substances from the liquid carbon dioxide by means of distillation.

2. Washing process as in claim 1, **characterized in that** it provides to insert the fabric (12) to be washed on at least a first unwinding roll (16), to unwind the fabric (12) from said unwinding roll (16), to carry out the washing treatment while the fabric (12) is being unwound, and to wind the washed fabric (12) onto a second winding roll (16).

3. Washing process as in any claim hereinbefore, **characterized in that** it provides to deliver carbon dioxide in a super-cooled liquid form, in a saturated liquid form, or in the form of a two-phase mixture, onto the fabric (12) during the winding/unwinding thereof by means of suitable delivery means (20) disposed at least along the travel of the fabric (12) between the first unwinding roll (16) and the second winding roll (16).

4. Washing process as in claim 3 when dependent on claim 2 , **characterized in that** it provides to immerse the fabric (12) in a bath of liquid carbon dioxide (22) during its transit from the first unwinding roll (16) to the second winding roll (16).

5. Washing process as in claims 4, **characterized in that** it provides to deliver carbon dioxide in a gaseous form onto the fabric (12) under the free surface of the bath of liquid carbon dioxide (22).

6. Washing process as in any claim 3 to 5, **characterized in that,** in order to generate a similar effect to that of cavitation, it provides to use ultrasounds to increase the washing efficacy of the fabric (12) immersed in the bath of liquid carbon dioxide (22).

7. Washing process as in any claim hereinbefore, **characterized in that** it provides to heat the fabric (12) before it is completely wound onto one of the winding/unwinding rolls (16) at the end of a washing treatment to render gaseous the carbon dioxide retained in said fabric (12) and to remove it therefrom.

8. Washing process as in any claim hereinbefore, **characterized in that** at the end of the washing treatment it provides to aspirate the gaseous carbon dioxide from said treatment chamber (14) until a pressure of less than -0.9 bar is reached in said treatment chamber (14).

9. Washing process as in any claim hereinbefore, **characterized in that** it provides to use at least two treatment chambers (14) operating alternately, either partially or totally overlapping the washing cycle, wherein the two treatment chambers (14) share one same feed and/or recovery and recirculation circuit (30) of the carbon dioxide.

## Patentansprüche

1. Verfahren zum Waschen von Textilien, aufweisend:
- Einbringen eines zu waschenden Textils (12) in eine Behandlungskammer (14)
- Erzeugen eines gewünschten Drucks im Inneren der Behandlungskammer (14),
- Durchführen einer Waschbehandlung an dem Textil (12) verwendend Kohlenstoffdioxid (CO₂) als ein Waschfluid,
- Wiederherstellen von Atmosphärendruck in der Behandlungskammer (14),
- Durchführen der Waschbehandlung an dem Textil (12), während Letzteres von jeweiligen Aufwickel/Abwickel-Rollen (16) abgewickelt und darauf aufgewickelt wird, die angeordnet sind im Inneren der Behandlungskammer (14) unter Druck,
**dadurch gekennzeichnet, dass** es ferner aufweist die Schritte:
- Rezirkulieren und Regenerieren des gasförmigen und/oder flüssigen Kohlenstoffdioxids, das während der Waschbehandlung verwendet wird,
- Entfernen von Schmutzsubstanzen aus dem flüssigen Kohlenstoffdioxid mittels Destillation.

2. Waschverfahren gemäß Anspruch 1, **dadurch gekennzeichnet, dass** es bereitstellt, das zu waschende Textil (12) in wenigstens eine erste Abwickelrolle (16) einzubringen, um das Textil (12) von der Abwickelrolle (16) abzuwickeln, um die Waschbehandlung durchzuführen, während das Textil (12) abgewickelt wird, und um das gewaschene Text (12) auf eine zweite Aufwickelrolle (16) aufzuwickeln.

3. Waschverfahren gemäß irgendeinem vorigen Anspruch, **dadurch gekennzeichnet, dass** es bereitstellt, Kohlenstoffdioxid in einer unterkühlten flüssigen Form, in einer gesättigten flüssigen Form oder in der Form einer Zwei-Phasen-Mischung auf das Textil (12) zuzuführen während des Aufwickelns/Abwickelns davon mittels geeigneter Zuführmittel (20), die wenigstens entlang des Bewegungswegs des Textils (12) zwischen der ersten Abwickelrolle (16) und der zweiten Aufwickelrolle (16) angeordnet sind.

4. Waschverfahren gemäß Anspruch 3, wenn abhängig von Anspruch 2, **dadurch gekennzeichnet, dass** es bereitstellt, das Textil (12) in ein Bad von flüssigem Kohlenstoffdioxid (22) zu tauchen, während es von der ersten Abwickelrolle (16) zu der zweiten Aufwickelrolle (16) übergeht.

5. Waschverfahren gemäß Anspruch 4, **dadurch gekennzeichnet, dass** es bereitstellt, Kohlenstoffdioxid in gasförmiger Form auf das Textil (12) zuzuführen unter der freien Fläche des Bads aus flüssigem Kohlenstoffdioxid (22).

6. Waschverfahren gemäß irgendeinem Anspruch 3 bis 5, **dadurch gekennzeichnet, dass** es, um einen gleichen Effekt wie jener von Kavitation zu erzeugen, bereitstellt, Ultraschall zu verwenden, um die Waschwirksamkeit des Textils (12), das in das Bad aus flüssigem Kohlenstoffdioxid (22) getaucht ist, zu erhöhen.

7. Waschverfahren gemäß irgendeinem vorigen Anspruch, **dadurch gekennzeichnet, dass** es bereitstellt, das Textil (12) zu erwärmen, bevor es komplett auf eine von den Abwickel/Aufwickel-Rollen (16) aufgewickelt ist am Ende einer Waschbehandlung, um das Kohlenstoffdioxid, das in dem Textil (12) einbehalten ist, gasförmig werden zu lassen, und es von davon zu entfernen.

8. Waschverfahren gemäß irgendeinem vorigen Anspruch, **dadurch gekennzeichnet, dass** es am Ende der Waschbehandlung bereitstellt, das gasförmige Kohlenstoffdioxid aus der Behandlungskammer (14) abzusaugen bis ein Druck von kleiner als -0.9 bar in der Behandlungskammer (14) erreicht ist.

9. Waschverfahren gemäß irgendeinem vorigen Anspruch, **dadurch gekennzeichnet, dass** es bereitstellt, wenigstens zwei Behandlungskammern (14) zu verwenden, die abwechselnd arbeiten, entweder teilweise oder komplett den Waschzyklus überlappend, wobei sich die beiden Behandlungskammern (14) einen selben Feed und/oder eine/n selbe/n Wiedergewinnung und Rezirkulationskreis (30) von Kohlenstoffdioxid teilen.

## Revendications

1. Procédé de lavage de tissus, comprenant les étapes consistant à :
- insérer un tissu (12) à laver dans une chambre de traitement (14) ;
- créer une pression souhaitée à l'intérieur de la chambre de traitement (14) ;
- effectuer un traitement de lavage sur le tissu (12) en utilisant du dioxyde de carbone (CO₂) comme liquide de lavage ;
- restaurer une pression atmosphérique à l'intérieur de la chambre de traitement (14) ;
- effectuer le traitement de lavage sur le tissu (12) pendant que ce dernier est déroulé de et enroulé sur des rouleaux d'enroulement/déroulement respectifs (16) disposés à l'intérieur de la chambre de traitement (14) sous pression ;
**caractérisé en ce qu'**il comprend en outre les étapes consistant à :
- remettre en circulation et régénérer le dioxyde de carbone gazeux et/ou liquide utilisé lors du traitement de lavage ;
- éliminer les substances polluantes du dioxyde de carbone liquide par distillation.

2. Procédé de lavage selon la revendication 1, **caractérisé en ce qu'**il prévoit d'insérer le tissu (12) à laver sur au moins un premier rouleau de déroulement (16), de dérouler le tissu (12) à partir dudit rouleau de déroulement (16), de réaliser le traitement de lavage tandis que le tissu (12) est déroulé, et d'enrouler le tissu lavé (12) sur un second rouleau d'enroulement (16).

3. Procédé de lavage selon l'une quelconque des revendications précédentes, **caractérisé en ce qu'**il prévoit de délivrer du dioxyde de carbone sous une forme de liquide sur-refroidi, sous une forme de liquide saturé ou sous une forme de mélange biphasique, jusque sur le tissu (12) pendant son enroulement/déroulement par l'intermédiaire de moyens de distribution appropriés (20) disposés au moins le long du parcours du tissu (12) entre le premier rouleau de déroulement (16) et le second rouleau d'enroulement (16).

4. Procédé de lavage selon la revendication 3, lorsqu'elle dépend de la revendication 2, **caractérisé en ce qu'**il prévoit d'immerger le tissu (12) dans un bain de dioxyde de carbone liquide (22) lors de son passage du premier rouleau de déroulement (16) au second rouleau d'enroulement (16).

5. Procédé de lavage selon les revendications 4, **caractérisé en ce qu'**il prévoit de délivrer du dioxyde de carbone sous forme gazeuse jusque sur le tissu (12) sous la surface libre du bain de dioxyde de carbone liquide (22).

6. Procédé de lavage selon l'une quelconque des revendications 3 à 5, **caractérisé en ce que** pour générer un effet similaire à celui d'une cavitation, il prévoit d'utiliser des ultrasons pour augmenter l'efficacité de lavage du tissu (12) immergé dans le bain de dioxyde de carbone liquide (22).

7. Procédé de lavage selon l'une quelconque des revendications précédentes, **caractérisé en ce qu'**il prévoit de chauffer le tissu (12) avant qu'il ne soit complètement enroulé sur l'un des rouleaux d'enroulement/déroulement (16) à la fin d'un traitement de lavage pour rendre gazeux le dioxyde de carbone retenu dans ledit tissu (12) et pour l'en éliminer.

8. Procédé de lavage selon l'une quelconque des revendications précédentes, **caractérisé en ce qu'**à la fin du traitement de lavage, il prévoit d'aspirer le dioxyde de carbone gazeux à partir de ladite chambre de traitement (14) jusqu'à ce qu'une pression inférieure à -0,9 bar soit atteinte dans ladite chambre de traitement (14).

9. Procédé de lavage selon l'une quelconque des revendications précédentes, **caractérisé en ce qu'**il prévoit d'utiliser au moins deux chambres de traitement (14) fonctionnant en alternance, en chevauchant partiellement ou totalement le cycle de lavage, dans lequel les deux chambres de traitement (14) partagent un même circuit d'alimentation et/ou de récupération et de remise en circulation (30) du dioxyde de carbone.
